# FASCICULE DE BREVET EUROPEEN

(11) **EP 3 102 544 B1**
(45) Date de publication et mention de la délivrance du brevet: **14.03.2018**
(21) Numéro de dépôt: 15709222.2
(22) Date de dépôt: 06.02.2015
(51) Int. Cl.: C02F 11/14, C02F 1/24, C02F 1/56, C02F 11/12, C02F 103/28

(54) **PROCEDE D'EPAISSISSEMENT OU DE DESHYDRATATION DE BOUES**
VERFAHREN ZUM EINDICKEN ODER ENTWÄSSERN VON SCHLAMM
PROCESS FOR THICKENING OR DEHYDRATING SLUDGE

(30) Priorité: 07.02.2014 FR 1450955
(43) Date de publication de la demande: 14.12.2016
(73) Titulaire: Roquette Frères, 62136 Lestrem (FR)
(72) Inventeur: CROWTHER-ALWYN, Laura, F-38100 Grenoble (FR); CARRE, Medhi, F-62122 Lapugnoy (FR)
(74) Mandataire: Cabinet Plasseraud
(86) Numéro de dépôt international: PCT/FR2015/050291
(87) Numéro de publication internationale: WO 2015/118275

(56) Documents cités:
- JP-A- 2010 036 085
- US-A- 5 543 056

## Description

### Domaine de l'invention

La présente invention concerne des procédés d'épaississement ou de déshydratation de boues mettant en oeuvre au moins un amidon cationique et une argile.

### Etat de la technique

Le traitement des eaux résiduaires issues des activités humaines et industrielles conduit à la production de boues. De manière générale, une boue à traiter est constituée majoritairement d'eau dans laquelle est intimement dispersée de la matière organique. Ces boues subissent une opération de séparation mécanique de la matière organique et de l'eau comprise dans la boue. Ces opérations sont comprises dans des procédés d'épaississement où l'étape de séparation mécanique est généralement réalisée sur une table d'égouttage ou par flottation ou encore dans des procédés de déshydratation des boues qui utilisent souvent des techniques de centrifugation, de filtre presse ou de filtre à bande. Ces procédés visent à obtenir des boues concentrées de forte siccité, c'est-à-dire à concentrer au maximum la matière sèche de la boue et à éliminer l'eau produite. Les boues ainsi traitées sont, selon leur origine, ensuite transportées vers un site de décharge, d'épandage agricole ou d'incinération.

Les procédés actuels d'épaississement ou de déshydratation des boues nécessitent l'ajout d'agents floculants dans la boue à traiter. Ceci va avoir pour effet de produire de la matière organique concentrée sous forme de flocs dispersés dans de l'eau. Ces flocs sont ensuite séparés de l'eau produite par les opérations mécaniques de séparation précédemment citées. Or, ces dernières peuvent imposer des contraintes mécaniques sur les flocs formés lors de leur séparation et il est donc nécessaire que ces flocs aient la résistance mécanique nécessaire pour pouvoir subir ces contraintes.

Industriellement, on utilise pour cela à ce jour principalement des polymères de type polyacrylamide. En effet, les boues concentrées préalablement floculées par ces polymères ont généralement une siccité très élevée. De plus, les flocs ont une résistance très élevée et l'opération d'épaississement ou de déshydratation mécanique se fait donc aisément. Cependant, différents problèmes sont liés à leur utilisation. Tout d'abord, ces polymères sont fabriqués à partir d'un monomère, l'acrylamide, qui est entré dans l'annexe I des classifications harmonisées au niveau européen par la 28^{ème} adaptation au progrès technique (APT) de la directive 67/548/CE du 6 août 2001, où il est notamment classé comme toxique en cas d'ingestion et pouvant causer des altérations génétiques ou le cancer. Les risques liés à la fabrication et l'utilisation de l'acrylamide sont donc réels. La présence de traces de monomère dans le polymère soulève également de nombreuses polémiques sur l'utilisation de polyacrylamides, notamment dans certains pays comme l'Allemagne. De plus, l'utilisation du polyacrylamide pour le traitement de boues a tendance à colmater les filtres lorsque ceux-ci sont utilisés pour séparer les flocs de l'eau. Un autre problème est également que ces polyacrylamides ont un coût relativement élevé.

Une autre solution est d'utiliser, en lieu et place de polyacrylamides, des amidons cationiques. Ces produits ont l'avantage d'être fabriqués à partir d'amidon, qui est une ressource renouvelable. Ces floculants à base d'amidon permettent de résoudre les problèmes du polyacrylamide dans la mesure où ils sont moins coûteux et, de manière générale, sont fabriqués à partir de produits moins toxiques pour l'homme ou son environnement. Un autre avantage est que, lors d'une étape de séparation de flocs et d'eau par filtration, il n'est pas observé de colmatage des filtres lorsqu'on utilise ces amidons cationiques comme agent floculant, contrairement à lorsque l'on utilise des polyacrylamides. Cependant, les flocs formés à l'aide de ces amidons cationiques ont une résistance très faible en comparaison avec ceux obtenus à partir de polyacrylamide. Ceci est particulièrement vrai pour les amidons cationiques de faible cationicité. Les boues concentrées obtenues à l'issue de l'étape d'épaississement ou de déshydratation présentent également l'inconvénient d'avoir une siccité plus faible que dans le cas où on utilise du polyacrylamide.

Le document WO 93/02967 décrit un procédé de déshydratation d'une eau usée comprenant de l'encre issue d'un procédé de désencrage, dans lequel est réalisée une première étape de formation de flocs par ajout d'un premier floculant cationique suivie d'une seconde étape de floculation par l'ajout d'un colloïde anionique. Bien que le floculant puisse être un amidon cationique, le floculant est préférentiellement un polymère organique synthétique. Selon une variante, le colloïde anionique est à base d'argile anionique. Selon l'exemple de réalisation, on utilise conjointement une argile avec un polymère synthétique cationique, selon un ratio massique de 4 pour 1 (voir page 11 I.13-16, 100 ppm de bentonite pour 25 ppm d'homopolymère de chlorure de diallyldiméthylammonium). Cependant, du fait de la faible disponibilité des argiles et du coût relativement élevé de ces dernières, ce procédé n'est pas pleinement satisfaisant.

Le document JP 2010-36085 décrit quant à lui un procédé de traitement des boues utilisant une première étape d'addition à la boue de bentonite, suivie d'une seconde étape d'addition à la boue additionnée en bentonite d'un mélange de sulfate d'aluminium et de polymère cationique d'amidon et d'acrylamide et de mélange, suivie d'une troisième étape d'ajout à la boue additionnée de thiosulfate de sodium et de mélange, suivie d'une quatrième étape de floculation puis d'une cinquième étape de séparation. L'ajout de thiosulfate permet d'améliorer la floculation de la boue additionnée par les autres floculants. Aucune indication sur le rapport de masse argile/amidon cationique ne figure dans ce document.

Le brevet US 5,543,056 décrit un procédé de potabilisation utilisant de l'argile et un polymère naturel cationique, tel que l'amidon cationique, comme coagulants. Le document indique que, pour le traitement d'une eau potable, la coagulation est plus efficace lorsque le ratio massique polymère naturel cationique : argile est compris entre environ 1 : 5 et environ 1 : 20.

### Résumé de l'invention

Il existe donc encore à ce jour un besoin de trouver des procédés d'épaississement ou de déshydratation de boues, n'utilisant pas de polyacrylamide ou en utilisant de faibles quantités et pouvant être facilement mis en oeuvre. Ces procédés doivent permettre également d'obtenir des boues de siccité élevées, et les flocs formés lors de ce procédé doivent présenter une résistance mécanique suffisante pour permettre une séparation mécanique aisée des flocs et de l'eau.

Ceci est justement ce que permet la présente invention qui concerne un procédé d'épaississement ou de déshydratation d'une boue comprenant au moins :
a) une étape d'addition d'amidon cationique (AC) dans la boue à traiter ;
b) une étape d'addition d'argile (AR) dans la boue à traiter ;
c) suivies d'une étape de floculation par agitation de la boue ainsi additionnée pour former un mélange de flocs et d'une solution aqueuse ;
d) suivie d'une étape de séparation mécanique des flocs et de la solution aqueuse formés à l'étape précédente ;
e) suivie d'une étape de récupération de la solution aqueuse et des flocs formant une boue traitée ;
dans lequel le rapport des masses (R) m_{AR}/(m_{AR}+m_{AC}) exprimées en masse sèche, va de 0,05 à 0,17 ;
et dans lequel les étapes a) et b) sont réalisées simultanément ou, dans un ordre quelconque, l'une après l'autre.

Ce procédé, utilisant conjointement une argile et un amidon cationique dans un ratio massique sélectionné, permet d'épaissir ou de déshydrater de manière très importante les boues à traiter. De plus, les flocs ont une résistance mécanique plus élevée, ce qui rend le procédé, notamment dans son étape de séparation mécanique, particulièrement facile à réaliser en comparaison avec les procédés similaires utilisant uniquement de l'amidon cationique.

### Description détaillée de l'invention

L'invention porte sur un procédé de traitement des boues, plus précisément un procédé d'épaississement ou de déshydratation, dans lequel on utilise différents floculants des boues, c'est-à-dire majoritairement de l'amidon cationique (AC) et minoritairement de l'argile (AR).
Il est précisé qu'en ce qui concerne les gammes indiquées dans la présente demande, conformément à l'usage, les termes « entre X et Y » excluent les bornes X et Y de la gamme alors que les termes « de X à Y » incluent les bornes X et Y dans la gamme.

L'amidon cationique utilisé dans le cadre de l'invention peut être obtenu à partir de tout type d'amidon natif d'origine naturelle ou hybride, y compris d'amidon issu d'organismes végétaux ayant subi des mutations ou manipulations génétiques. Lesdits amidons peuvent notamment être issus de pomme de terre, de pomme de terre à haute teneur en amylopectine (pomme de terre waxy), de blé, de blé à haute teneur en amylopectine (blé waxy), de maïs, de maïs à haute teneur en amylopectine (maïs waxy), de maïs à haute teneur en amylose, de riz, de pois, d'orge ou de manioc, des coupes ou fractions qui peuvent en être faites, et les mélanges quelconques d'au moins deux quelconques des produits susmentionnés. En particulier, l'amidon cationique est avantageusement obtenu à partir d'amidon de maïs, de blé, de maïs waxy ou à partir de fécule de pomme de terre, préférentiellement à partir de fécule de pomme de terre ou de maïs waxy, tout préférentiellement à partir de fécule de pomme de terre.

La sélection de cet amidon natif a par exemple une influence sur la masse moléculaire finale ainsi que sur son taux de branchement, liée à la teneur en amylose et en amylopectine.

La réaction de cationisation peut être effectuée selon l'une des méthodes bien connues de l'homme du métier, à l'aide de réactifs cationiques tels que décrits par exemple dans « Starch Chemistry and Technology » - Vol. Il - Chapter XVI - R.L. WHISTLER and E.F. PASCHALL - Academic Press (1967). L'amidon est introduit dans un réacteur en présence de ces réactifs.

Préférentiellement, l'amidon utilisé lors de la réaction de cationisation se présente sous une forme granulaire.

La réaction peut être conduite en phase lait, l'amidon granulaire en suspension dans un solvant étant cationisé en utilisant les conditions de température, de temps et de catalyse bien connues de l'homme de l'art.

A la fin de la réaction, on peut récupérer l'amidon ainsi cationisé par filtration, cet amidon cationique pouvant être ensuite lavé puis séché.

D'une façon alternative, la réaction peut être conduite en phase sèche, c'est-à-dire en présence de quantités d'eau ajoutées à l'amidon considérées comme faibles, par exemple dans des quantités d'eau inférieures à 20% de la masse d'amidon introduit pour la réaction de cationisation, de préférence inférieures à 10%.

La réaction peut également être réalisée en phase colle. Par « phase colle », on entend que l'amidon est au moins partiellement solubilisé, généralement totalement solubilisé, dans une phase solvant, ladite phase solvant étant généralement une phase aqueuse ou une phase hydroalcoolique. On obtient alors à la fin de ce procédé un amidon cationique sous forme d'une composition amylacée liquide. Il est également possible d'obtenir l'amidon cationique sous forme solide par séchage de la composition ou encore par précipitation dans de l'alcool ou un solvant hydroalcoolique.

De préférence, la réaction de cationisation est effectuée avec des réactifs azotés à base d'amines tertiaires ou de sels d'ammonium quaternaires. Parmi ces réactifs, on préfère utiliser les chlorhydrates de 2-dialkylaminochloréthane tels que le chlorhydrate de 2-diéthylaminochloréthane ou les halogénures de glycidyl-triméthylammonium et leurs halohydrines, tels que le chlorure de N-(3-chloro-2-hydroxypropyl)-triméthylammonium, ce dernier réactif étant préféré. On peut ainsi caractériser l'amidon cationique par le pourcentage d'azote fixé.

On procède généralement à cette réaction en milieu alcalin, à un pH supérieur à 8, voire supérieur à 10, le pH pouvant être ajusté par exemple par de la soude.

Les taux de réactif mis en oeuvre peuvent être choisis de telle sorte que les amidons cationiques résultants présentent la cationicité voulue. Dans le cas où le réactif cationique comprend de l'azote, on peut caractériser la cationicité de l'amidon par le pourcentage d'azote qui a été fixé sur l'amidon. L'amidon cationique (A) selon l'invention peut présenter un pourcentage massique en azote fixé allant de 0,1 à 7%, avantageusement de 0,5 à 6%, préférentiellement de 1 à 5%. De manière alternative, le pourcentage en azote fixé peut aller de 0,2 à 1,5%.

Les quantités d'azote fixé sont classiquement déterminées par la méthode de Kjeldahl.

De manière non limitative, on peut utiliser les procédés décrits dans les documents WO 2007121981, EP 737210, WO 9962957, US 2995513, US 3842005, US 4579944.

Selon l'invention, l'amidon cationique peut être additionné lors de l'étape a) du procédé par l'intermédiaire d'une composition amylacée liquide comprenant au moins un amidon cationique. Cette variante présente l'avantage d'être facile à mettre en oeuvre dans des installations industrielles. De préférence, la concentration massique en amidon cationique de cette composition additionnée lors de l'étape a) va de 0,1 à 50g/L.

Pour réaliser cette composition amylacée, il peut être nécessaire de solubiliser l'amidon cationique dans le solvant si cet amidon cationique est sous forme solide. L'amidon cationique (A) utile à l'invention peut être soluble dans l'eau froide. La composition amylacée liquide est généralement une composition aqueuse qui peut être issue du procédé de cationisation en phase colle précédemment décrit.

Selon une variante avantageuse de l'invention, on utilise une composition amylacée liquide d'amidon cationique exempte d'agent conservateur.

Lorsque l'amidon cationique est sous forme d'une composition amylacée liquide, on peut observer une dégradation microbienne lors de son stockage et du transport du produit. Pour limiter ce phénomène, on peut ajouter un agent biocide, qui peut être choisi parmi les phtalates, par exemple un de ceux commercialisés par Dow Chemical Company sous la marque VINYZENE™. Or, bien que la concentration en agent biocide nécessaire à la conservation de l'amidon sous forme de solution liquide soit faible, ces agents biocides peuvent constituer des constituants non désirés pour le traitement d'une boue, la boue traitée pouvant par exemple être épandue à l'issue du procédé de traitement. Le fait que l'amidon soit stocké et transporté sous forme solide limite les problèmes de dégradation. Ceci permet de s'affranchir de l'ajout d'un agent conservateur, ceci pouvant être particulièrement intéressant dans un procédé de traitement de l'eau.

La composition amylacée comprenant l'amidon cationique peut comprendre en outre des constituants additionnels, tels que des agents biocides décrits ci-dessus.

La composition amylacée liquide utile au procédé peut être obtenue également à partir d'une composition commerciale d'amidon cationique plus concentrée, présentant par exemple une concentration en amidon cationique comprise entre 150 g/L et 500 g/L, que l'on dilue avant utilisation.

L'argile utilisée dans le procédé de l'invention peut être de tout type mais est avantageusement une argile choisie parmi les bentonites, les montmorillonites et les smectites. Préférentiellement, l'argile est une bentonite. Cette bentonite est préférentiellement une bentonite activée.

Selon l'invention, l'argile peut être additionnée lors de l'étape a) du procédé par l'intermédiaire d'une composition liquide comprenant au moins une argile. Cette variante présente l'avantage d'être facile à mettre en oeuvre dans des installations industrielles. De préférence, la concentration massique en argile de cette composition additionnée lors de l'étape a) va de 1 à 50g/L, par exemple de 5 à 30 g/L.

La composition liquide d'argile est généralement une composition aqueuse.

La composition liquide d'argile utile au procédé peut être obtenue également à partir d'une composition d'argile plus concentrée que l'on dilue avant utilisation.

Bien que leur utilisation ne soit pas nécessaire pour réaliser le procédé selon l'invention, on peut également additionner d'autres produits classiquement utilisés dans le traitement de boues, notamment des agents coagulants, voire un ou plusieurs floculants autres que le ou les amidons cationiques (A) et argiles utiles à l'invention. Ces autres floculants, définis selon la présente demande comme « floculants additionnels », peuvent être des polysaccharides anioniques ou cationiques autres que les amidons cationiques (A) ou encore peuvent être des polyacrylamides.

Selon le procédé de l'invention, il est avantageux d'utiliser comme floculant additionnel un polyacrylamide cationique (P).

Selon cette variante de l'invention, en ce qui concerne le polyacrylamide cationique, il est de préférence de haut poids moléculaire, en particulier de poids moléculaire Mₙ d'au moins 1.10⁶ g.mol⁻¹. De manière avantageuse, le poids moléculaire du polyacrylamide Mₙ va de 1.10⁶ à 20.10⁶ g.mol⁻¹, notamment de 1.10⁶ à 15.10⁶ g.mol⁻¹. Le polyacrylamide cationique utilisé peut être sous une forme linéaire ou sous une forme ramifiée. Ledit polyacrylamide peut être cationique jusqu'à 100 % en charge et, de préférence, entre 0,1 et 55 %, par exemple entre 0,1 et 25 %, en charge. De manière alternative, on peut quantifier le niveau de cationicité du polyacrylamide à l'aide d'un détecteur de flux de type *Streaming Current Detector* (SCD), par titration à l'aide de polyéthylènesulfonate de sodium. Préférentiellement, le niveau de cationicité du polyacrylamide va de 500 à 5000 µeq/g, de préférence de 2000 à 4500 µeq/g.

Le polyacrylamide cationique peut être choisi parmi les copolymères de polyacrylamide avec des monomères cationiques ou les polyacrylamides modifiés selon la réaction de Mannich. Comme exemples de copolymères polyacrylamides cationiques, on peut citer les copolymères acrylamide / halogénure de diallyldialkylammonium, de préférence chlorure de diallyldialkylammonium, les copolymères diaminoalkyl(méth)acrylate / acrylamide et les copolymères dialkylaminoalkyl(méth)acrylate / acrylamide, les copolymères trialkylaminoalkyl(méth)acrylate, les groupements alkyles comprenant de préférence de 1 à 6 atomes de carbone.

Selon cette variante de l'invention, le polyacrylamide cationique peut être additionné lors du procédé par l'intermédiaire d'une composition liquide comprenant au moins un polyacrylamide cationique. Cette variante présente l'avantage d'être facile à mettre en oeuvre dans des installations industrielles. De préférence, la concentration massique en polyacrylamide cationique dans cette composition va de 0,1 à 20g/L.
Le polyacrylamide cationique peut être soluble dans l'eau froide. Il peut par exemple être sous la forme d'une poudre soluble dans l'eau froide. Il peut également se présenter sous forme d'une émulsion.
La composition liquide de polyacrylamide cationique est généralement une composition aqueuse, qui peut comprendre principalement comme solvant de l'eau.

La composition liquide de polyacrylamide cationique utile au procédé peut être obtenue également à partir d'une composition de polyacrylamide plus concentrée que l'on dilue avant utilisation.

Selon cette variante de l'invention, l'amidon cationique et le polyacrylamide cationique peuvent être additionnés dans la boue à traiter lors de l'étape a) selon un rapport des masses (R') m_{AC}/(m_{AC}+m_{P}), exprimées en masse sèche, compris entre 0,6 et 0,99.

R' est avantageusement compris entre 0,7 et 0,97, de préférence compris entre 0,85 et 0,95, tout préférentiellement entre compris entre 0,87 et 0,94.
Lors du procédé selon l'invention, l'amidon cationique et le polyacrylamide cationique peuvent être additionnés séparément ou simultanément. Selon cette dernière sous-variante, l'étape d'addition peut se faire par l'intermédiaire de l'addition d'une composition liquide comprenant au moins un amidon cationique et au moins un polyacrylamide cationique.

Les floculants sont utilisés dans le procédé de l'invention dans des quantités permettant de floculer la boue à traiter. Ces quantités pourront être adaptées par l'homme du métier en fonction du type de boue à traiter. De la même manière, les quantités seront adaptées par l'homme du métier en fonction de la résistance mécanique des flocs désirée pour pouvoir réaliser de manière satisfaisante les étapes de floculation c) et de séparation mécanique d) qui sont détaillées ci-après.
Sauf si explicitement précisé, il est indiqué que les quantités en floculants, donc en amidon cationique, en argile et en polyacrylamide éventuel, sont exprimées en masse sèche.

Les quantités de boue à traiter par les floculants sont également exprimées en masse sèche de boue à traiter.

Selon le procédé de l'invention, la quantité totale d'amidon cationique peut aller de 8 à 50 g/kg de boue à traiter (sec/sec), avantageusement de 15 à 45 g/kg (sec/sec), préférentiellement de 20 à 40 g/kg (sec/sec).
Selon le procédé de l'invention, la quantité totale d'argile va avantageusement de 1 à 20 g/kg de boue à traiter (sec/sec), avantageusement de 2 à 15 g/kg (sec/sec), préférentiellement entre 3 et 10 g/kg (sec/sec) (bornes exclues), tout préférentiellement de 6 à 9 g/kg. Avantageusement, les quantités massiques de floculants additionnels, notamment de polyacrylamide cationique, sont inférieures à 50 g/kg (sec/sec) de boue à traiter, avantageusement inférieures à 30 g/kg (sec/sec), préférentiellement inférieures à 10 g/kg (sec/sec). Selon un mode de réalisation, la quantité de floculant additionnel, notamment de polyacrylamide cationique, va de 0,1 à 10 g/kg (sec/sec), avantageusement de 0,5 à 8 g/kg (sec/sec), préférentiellement de 1 à 4 g/kg (sec/sec).

Selon le procédé de l'invention, l'amidon cationique et l'argile peuvent être additionnés dans la boue en une seule dose, ou par l'addition de différentes doses. Dans le cas d'un procédé continu de traitement des boues, il est possible d'additionner la boue à traiter par l'addition continue de floculants. De préférence, l'amidon cationique et l'argile sont introduits de manière séparée et ne sont pas mélangés préalablement à l'addition dans la boue.

La boue à traiter peut être de tout type et notamment être issue de tout type d'activité humaine et industrielle. Le procédé selon l'invention est particulièrement utile lorsque la boue est issue d'effluents urbains ou lorsqu'il s'agit de boues industrielles, notamment de boues issues de l'industrie agroalimentaire telles que les boues issues d'amidonnerie, de papeteries, d'industries chimiques. Le procédé selon l'invention est particulièrement efficace pour les boues comprenant de la matière organique en suspension.
Selon le procédé de l'invention, la boue à traiter peut, avant addition de l'amidon cationique et de l'argile utiles à l'invention, subir un prétraitement, par exemple un prétraitement de digestion par des bactéries ou un prétraitement par des agents chimiques. La boue à traiter peut notamment, selon le procédé de l'invention, subir un prétraitement à l'aide d'agents coagulants, par exemple à l'aide de sels métalliques. La boue à traiter est généralement une composition aqueuse comprenant de l'eau et des matières en suspension, la quantité de matières en suspension étant supérieure ou égale à 0,2% de la masse de la composition aqueuse.
En ce qui concerne les étapes d'addition a) et b), elles sont réalisées simultanément ou, dans un ordre quelconque, l'une après l'autre, avec un délai entre chacune des introductions. Dans ce cas, ce délai est généralement inférieur à quelques minutes, par exemple inférieur à 1 minute. De préférence, l'étape a) d'addition d'amidon cationique est réalisée avant l'étape b) d'addition d'argile.

L'étape c) du procédé consiste en une étape de floculation par agitation de la boue additionnée par les floculants pour former un mélange de flocs et d'une solution aqueuse. Cette étape est classiquement conduite dans un floculateur.

Selon le procédé de l'invention, la boue floculée obtenue à l'étape c) est soumise à au moins une étape d) de séparation mécanique, ceci afin de séparer flocs et solution aqueuse obtenus précédemment.
Selon un mode de réalisation, cette étape d) est réalisée en traitant la boue floculée obtenue à l'étape c) par passage sur une table d'égouttage, centrifugation et/ou par flottation. Ces techniques sont généralement utilisées lorsque l'on souhaite réaliser un procédé d'épaississement de la boue. Ces procédés permettent généralement d'obtenir une siccité moyenne de la boue, cette siccité allant de 4 à 10%, souvent de 5 à 7%. La boue ainsi obtenue est généralement sous forme liquide.
Selon un autre mode de réalisation, cette étape d) est réalisée en traitant la boue floculée obtenue à l'étape c) par centrifugation et/ou par passage sur filtre presse ou filtre à bande. Ces techniques sont généralement utilisées lorsque l'on souhaite réaliser un procédé de déshydratation de la boue. Ces procédés permettent, selon la technique utilisée, d'obtenir une siccité élevée de la boue, cette siccité étant généralement supérieure à 10% et allant jusqu'à 40%. Il faut noter que la centrifugation est une technique permettant, selon le réglage de la centrifugeuse choisi parmi l'homme du métier, d'obtenir une siccité de la boue traitée moyenne ou élevée.
Selon l'invention, le procédé peut comprendre différentes étapes successives de séparation. A titre d'exemple, il est possible de réaliser un procédé de déshydratation de boue comprenant une première étape de séparation par passage sur une table d'égouttage, centrifugation et/ou par flottation puis une seconde étape de séparation par centrifugation et/ou par passage sur filtre presse ou filtre à bande.

Grâce à l'association dans un ratio sélectionné d'amidon cationique et d'argile, le procédé selon l'invention permet d'éliminer de grandes quantités d'eau dans la boue à traiter, avec des résultats dépassant ceux obtenus avec des procédés similaires utilisant exclusivement de l'amidon cationique. En particulier, la boue traitée selon le procédé de l'invention peut présenter à l'issue de l'étape e) une siccité d'au moins 4%, généralement allant de 4 à 60%, généralement ne dépassant pas 40%, avantageusement d'au moins 10%, préférentiellement d'au moins 20%.

Selon le procédé de l'invention, les étapes successives a), b), c), d) et e) peuvent être réalisées une ou plusieurs fois. Cela signifie que la boue traitée récupérée à l'étape e) peut éventuellement subir un autre traitement des étapes successives a), b), c), d) et e).

L'invention va maintenant être illustrée dans les exemples suivants, non limitatifs de la présente invention.

### Exemples

### Exemple 1 : influence du taux de cationicité

Cet exemple décrit un traitement de déshydratation d'une boue municipale.

Des solutions d'amidon cationique (fécule de pomme de terre cationisée (AC)) sont préparées en suivant l'enseignement du brevet US 4579944, ces fécules présentant différents niveaux de cationicité, exprimée en pourcentage d'azote fixé (%N), ce pourcentage étant précisé dans le tableau 1.

**Tableau 1**

| Amidon cationique | %N |
|---|---|
| AC 1 | 0,3 |
| AC 2 | 0,4 |
| AC 3 | 0,6 |

On utilise également une argile de type bentonite (AQUAMONT WB90 commercialisée par la société S&B Industrial Minerais sous forme d'une poudre à 90% de matière sèche), ci-après dénommée B. Elle est préalablement préparée sous forme d'une solution à 25 g/L.

Le protocole Jar-Test consiste à ajouter l'argile et l'amidon cationique simultanément dans 500mL de boue, sous agitation 45 tpm pendant une minute. Les résultats de floculation sont alors exprimés en taille des flocs dans le bêcher (note de 0 à 10 : 0 = pas de flocs visibles ; 10 = très gros flocs). Puis, la boue floculée est filtrée sur un tamis de maille 500µm ; on évalue alors :
- la qualité des flocs retenus sur le tamis (note de 0 à 10 : 0 = pas de flocs visibles ; 10 = très gros flocs) ;
- la vitesse de filtration au travers du tamis (en volume recueilli au cours du temps, en ml/s) ;
- la quantité de flocs traversant le tamis (% massique de flocs dans le filtrat) ;
- la turbidité du filtrat (en UTN).

Les résultats sont donnés dans le tableau 2.

**Tableau 2**

| AC (32g/kg) | +B (5,7g/kg) | Flocs bécher | Flocs tamis | Turbidité du filtrat (UTN) | % de flocs dans le filtrat | Volume de filtrat (ml/s) | | |
|---|---|---|---|---|---|---|---|---|
| | | | | | | 10s | 30s | 300s |
| AC 1 | non | 2 | 1 | 30 | 29 | 415 | 420 | 428 |
| AC 1 | oui | 3 | 2 | 11 | 22 | 440 | 445 | 450 |
| AC 2 | non | 3 | 2 | 25 | 22 | 430 | 440 | 448 |
| AC 2 | oui | 4 | 2 | 12 | 18 | 440 | 450 | 465 |
| AC 3 | non | 3 | 2 | 31 | 33 | 440 | 448 | 453 |
| AC 3 | oui | 4 | 3 | 13 | 16 | 455 | 463 | 468 |

L'augmentation du niveau de cationisation permet d'améliorer légèrement la floculation. La présence de bentonite permet d'améliorer la floculation pour les différents amidons cationiques, de manière particulièrement significative pour la turbidité du filtrat et la quantité de flocs dans le filtrat, c'est-à-dire la qualité de l'eau rejetée dans l'environnement en fin de procédé.

### Exemple 2 : influence de la base

Des solutions d'amidon cationique sont préparées à partir de pomme de terre, de maïs riche en amylose (amylomaïs), de maïs riche en amylopectine (maïs cireux) ou de pois, à un pourcentage d'azote fixé à 1,2%. L'origine de l'amidon est précisée dans le tableau 3.

**Tableau 3**

| Produit | Base |
|---|---|
| AC 4 | Pomme de terre |
| AC 5 | Maïs cireux |
| AC 6 | Amylomaïs |
| AC 7 | Pois |

Ces produits sont testés en Jar-Test d'après le même protocole que dans l'exemple 1. Les résultats sont décrits dans le tableau 4.

**Tableau 4**

| Floculant (16g/kg) | + B (5,7g/kg) | Turbidité du filtrat (UTN) | % de flocs dans le filtrat | Volume de filtrat (ml/s) | | |
|---|---|---|---|---|---|---|
| | | | | 10s | 30s | 300s |
| AC 4 | non | 25 | 40 | 330 | 385 | 400 |
| AC 5 | non | 35 | 59 | 350 | 395 | 415 |
| AC 6 | non | 35 | 61 | 335 | 385 | 405 |
| AC 7 | non | 34 | 56 | 335 | 385 | 405 |
| AC 4 | oui | 12 | 32 | 305 | 350 | 375 |
| AC 5 | oui | 17 | 45 | 290 | 345 | 365 |
| AC 6 | oui | 18 | 48 | 290 | 355 | 395 |
| AC 7 | oui | 13 | 47 | 300 | 350 | 375 |

Dans cet exemple, la dose d'amidon cationique est deux fois inférieure à l'exemple 1. Néanmoins, en présence de bentonite il est possible de maintenir un niveau de turbidité bas et de diminuer la quantité de flocs traversant le tamis. Pour ces deux critères, ces résultats sont notamment meilleurs avec l'amidon cationique AC 4 à base de pomme de terre.

### Exemple 3 : influence du ratio amidon cationique / argile

Dans cet exemple la boue à traiter est issue d'une industrie amidonnière. L'amidon cationique AC 8 est une solution à base de fécule de pomme de terre, avec un niveau de cationicité de 4% d'azote fixé. Le protocole est identique aux exemples précédents, le dosage d'amidon cationique est fixé à 32g/kg pour la boue testée. La dose d'argile introduite varie entre 0 et 66g/kg de boue sèche. Dans cet exemple, on détermine la résistance des flocs en rhéologie. Celle-ci consiste en la mesure de la contrainte à laquelle les flocs sont détruits lorsque les flocs retenus sur le tamis sont testés sur un rhéomètre de type AR2000 en utilisant une géométrie de mesure de type cylindres concentriques à une fréquence de 1Hz à 20°C, la contrainte augmentant de 0,02 à 880 Pa. Les résultats sont donnés dans le tableau 5.

**Tableau 5**

| Rapport des masses (R) | Dose d'argile introduite (g/kg) | Contrainte des flocs à la rupture (Pa) |
|---|---|---|
| 0,00 | 0 | 40 |
| 0,02 | 1 | 80 |
| 0,05 | 2 | 125 |
| 0,09 | 3 | 125 |
| 0,14 | 5 | 200 |
| 0,17 | 7 | 125 |
| 0,68 | 67 | 25 |

La résistance des flocs est particulièrement élevée pour un dosage allant de 2 à 7 g/kg dans cet exemple, soit un rapport R tout préféré allant de 0,05 à 0,17.

### Exemple 4 : influence de la concentration de la solution d'argile

L'argile de l'exemple 1 est préparée selon différentes dilutions comme décrit dans le tableau 6.

**Tableau 6**

| Solution d'argile | Protocole |
|---|---|
| B1 | Solution à 50g/L dans l'eau déminéralisée |
| B2 | Solution à 25g/L dans l'eau déminéralisée |
| B3 | Solution à 5g/L dans l'eau déminéralisée |

Les essais en Jar-Test sont réalisés sur la même boue que dans l'exemple 3. L'amidon cationique AC 8 est ajouté à un dosage de 24g/kg et l'argile à un dosage de 7g/kg (sec/sec), soit un rapport R égal à 0,22. Comme dans l'exemple 3, on détermine la résistance des flocs en rhéologie et on exprime le résultat en contrainte maximale avant rupture, en Pa. Les résultats sont donnés dans le tableau 7.

**Tableau 7**

| Solution d'argile | Contrainte des flocs à la rupture (Pa) |
|---|---|
| B1 | 160 |
| B2 | 250 |
| B3 | 160 |

La solution diluée à 25 g/L dans l'eau déminéralisée permet d'obtenir une résistance des flocs plus élevée de moitié par rapport à une dilution à 5 g/L ou 50 g/L.

### Exemple 5 : influence de l'amidon cationique et du ratio amidon cationique / argile

Dans cet exemple la boue à traiter est également issue d'une industrie amidonnière.

Les amidons cationiques utilisés sont les amidons AC 4 et AC 8 déjà présentés.

Le protocole est identique aux exemples précédents, le dosage d'amidon cationique est fixé à 32g/kg pour la boue testée. La dose d'argile introduite varie de 0 à 48g/kg de boue sèche. Dans cet exemple, on détermine :
1) la résistance des flocs en rhéologie comme réalisé à l'exemple 3 ;
2) l'effet sur la séparation des phases liquides et solides comme réalisé à l'exemple 2.

Les résultats obtenus sont reportés au Tableau 8.

**Tableau 8**

| Amidon cationique | Rapport des masses (R) | Dose d'argile introduite (g/kg) | Turbidité du filtrat (UTN) | % de flocs dans le filtrat | Contrainte des flocs à la rupture (Pa) |
|---|---|---|---|---|---|
| AC 8 | 0,00 | 0 | 48 | 38 | 30 |
| AC 8 | 0,03 | 1 | 38 | 30 | 70 |
| AC 8 | 0,06 | 2 | 18 | 25 | 210 |
| AC 8 | 0,15 | 5,6 | 19 | 24 | 220 |
| AC 8 | 0,25 | 10,5 | 22 | 29 | 160 |
| AC 8 | 0,45 | 26,2 | 40 | 31 | 65 |
| AC 8 | 0,60 | 48 | 54 | 40 | 25 |
| AC 4 | 0,00 | 0 | 58 | 43 | 15 |
| AC 4 | 0,03 | 1 | 47 | 34 | 50 |
| AC 4 | 0,06 | 2 | 25 | 29 | 180 |
| AC 4 | 0,15 | 5,6 | 27 | 30 | 180 |
| AC 4 | 0,25 | 10,5 | 30 | 32 | 130 |
| AC 4 | 0,45 | 26,2 | 49 | 38 | 65 |
| AC 4 | 0,60 | 48 | 52 | 46 | 25 |

Ce Tableau montre que plus la résistance des flocs est importante, meilleure est la séparation entre les phases liquides et solides. L'ajout d'argile, dans les rapports de masse du procédé selon l'invention (entre 0,01 et 0,5, avantageusement va de 0,02 à 0,25, de préférence de 0,03 à 0,19, tout préférentiellement de 0,05 à 0,17), permet de diminuer la turbidité et la quantité de flocs dans le filtrat, c'est-à-dire que la qualité de l'eau rejetée dans l'environnement présente une meilleure qualité.

Cette amélioration est observée quel que soit le degré de cationicité de l'amidon utilisé (AC 8 et AC 4 comprennent respectivement 4% et 1,2% d'azote fixé).

## Revendications

1. Procédé d'épaississement ou de déshydratation d'une boue comprenant au moins :
a) une étape d'addition d'amidon cationique (AC) dans la boue à traiter ;
b) une étape d'addition d'argile (AR) dans la boue à traiter ;
c) suivies d'une étape de floculation par agitation de la boue ainsi additionnée pour former un mélange de flocs et d'une solution aqueuse ;
d) suivie d'une étape de séparation mécanique des flocs et de la solution aqueuse formés à l'étape précédente ;
e) suivie d'une étape de récupération de la solution aqueuse et des flocs formant une boue traitée ;
dans lequel le rapport des masses (R) m_{AR}/(m_{AR}+m_{AC}) exprimées en masse sèche, va de 0,05 à 0,17 ;
et dans lequel les étapes a) et b) sont réalisées simultanément ou, dans un ordre quelconque, l'une après l'autre.

2. Procédé selon la revendication 1 **caractérisée en ce que** l'amidon cationique (A) est obtenu par réaction de cationisation effectuée avec un réactif cationique comprenant de l'azote et présente un pourcentage massique en azote fixé allant de 0,1 à 7%, avantageusement de 0,5 à 6%, préférentiellement de 1 à 5%.

3. Procédé selon l'une des revendications précédentes **caractérisé en ce que** l'amidon cationique est obtenu à partir d'amidon de maïs, de blé, de maïs waxy ou à partir de fécule de pomme de terre, préférentiellement à partir de fécule de pomme de terre ou de maïs waxy, tout préférentiellement à partir de fécule de pomme de terre.

4. Procédé selon l'une des revendications précédentes **caractérisé en ce que** l'étape a) d'addition d'amidon cationique est réalisée avant l'étape b) d'addition d'argile.

5. Procédé selon l'une des revendications précédentes **caractérisé en ce que** la quantité totale d'amidon cationique en masse sèche va de 8 à 50 g/kg de boue à traiter (sec/sec), avantageusement de 15 à 40 g/kg (sec/sec), préférentiellement de 20 à 40 g/kg (sec/sec).

6. Procédé selon l'une des revendications précédentes **caractérisé en ce que** la quantité totale d'argile en masse sèche va 1 à 20 g/kg de boue à traiter (sec/sec), avantageusement de 2 à 15 g/kg (sec/sec), préférentiellement entre 3 et 10 g/kg (sec/sec) (bornes exclues), tout préférentiellement de 6 à 9 g/kg.

7. Procédé selon l'une des revendications précédentes **caractérisé en ce que** la boue à traiter à l'étape a) est issue de boues industrielles, notamment de boues issues de l'industrie agroalimentaire telles que les boues issues d'amidonnerie, de papeteries, d'industries chimiques, ou d'effluents urbains.

8. Procédé selon l'une des revendications précédentes **caractérisé en ce qu'**au moins une étape de séparation mécanique d) est réalisée en traitant la boue floculée par passage sur une table d'égouttage et/ou par flottation de la boue.

9. Procédé selon l'une des revendications précédentes **caractérisé en ce qu'**au moins une étape de séparation mécanique d) est réalisée en traitant la boue floculée par centrifugation et/ou par passage sur filtre presse.

10. Procédé selon l'une des revendications précédentes **caractérisé en ce que** la boue traitée obtenue à l'étape e) présente une siccité d'au moins 4%, avantageusement d'au moins 15%, préférentiellement d'au moins 20%.

## Patentansprüche

1. Verfahren zur Eindickung oder Entwässerung eines Schlamms, welches wenigstens umfasst:
a) einen Schritt des Zugebens einer kationischen Stärke (AC) zu dem zu behandelnden Schlamm;
b) einen Schritt des Zugebens von Ton (AR) zu dem zu behandelnden Schlamm;
c) gefolgt von einem Schritt des Ausflockens durch Bewegen des so ergänzten Schlamms zur Bildung einer Mischung von Flocken und einer wässrigen Lösung;
d) gefolgt von einem Schritt der mechanischen Abtrennung der im vorhergehenden Schritt gebildeten Flocken von der wässrigen Lösung;
e) gefolgt von einem Schritt der Wiedergewinnung der einen behandelten Schlamm bildenden wässrigen Lösung und der Flocken;
wobei das als Trockenmasse ausgedrückte Massenverhältnis (R) m_{AR}/(m_{AR}+m_{AC}) von 0,05 bis 0,17 reicht;
und wobei die Schritte a) und b) gleichzeitig oder in einer beliebigen Reihenfolge nacheinander ausgeführt werden.

2. Verfahren nach Anspruch 1, **dadurch gekennzeichnet, dass** die kationische Stärke (A) durch eine mit einem stickstoffhaltigen kationischen Reagenz durchgeführte Kationisierungsreaktion erhalten wird und einen Gewichtsprozentsatz gebundenen Stickstoff von 0,1 bis 7%, vorteilhafterweise von 0,5 bis 6%, bevorzugt von 1 bis 5% aufweist.

3. Verfahren nach einem der vorangehenden Ansprüche, **dadurch gekennzeichnet, dass** die kationische Stärke ausgehend von Maisstärke, Getreidestärke, Wachsmaisstärke oder Kartoffelstärke erhalten wird, bevorzugt ausgehend von Kartoffelstärke oder Wachsmaisstärke, besonders bevorzugt ausgehend von Kartoffelstärke.

4. Verfahren nach einem der vorangehenden Ansprüche, **dadurch gekennzeichnet, dass** der Schritt a) des Zugebens von kationischer Stärke vor dem Schritt b) des Zugebens von Ton durchgeführt wird.

5. Verfahren nach einem der vorangehenden Ansprüche, **dadurch gekennzeichnet, dass** die Gesamtmenge kationischer Stärke in der Trockenmasse 8 bis 50 g/kg von zu behandelndem Schlamm (trocken/trocken) beträgt, vorteilhafterweise 15 bis 40 g/kg (trocken/trocken), bevorzugt 20 bis 40 g/kg (trocken/trocken).

6. Verfahren nach einem der vorangehenden Ansprüche, **dadurch gekennzeichnet, dass** die Gesamtmenge Ton in der Trockenmasse 1 bis 20 g/kg von zu behandelndem Schlamm (trocken/trocken) beträgt, vorteilhafterweise 2 bis 15 g/kg (trocken/trocken), bevorzugt zwischen 3 und 10 g/kg (trocken/trocken) (ausschließlich Grenzen), stärker bevorzugt 6 bis 9 g/kg.

7. Verfahren nach einem der vorangehenden Ansprüche, **dadurch gekennzeichnet, dass** der zu behandelnde Schlamm in Schritt a) aus Industrieschlamm stammt, insbesondere aus Schlämmen aus der Agrar-Lebensmittelindustrie, wie beispielsweise Schlämme aus der Stärkeverarbeitung, der Papierherstellung, der chemischen Industrie oder aus städtischen Abwässern.

8. Verfahren nach einem der vorangehenden Ansprüche, **dadurch gekennzeichnet, dass** wenigstens ein Schritt der mechanischen Trennung d) durchgeführt wird, indem der ausgeflockte Schlamm durch Führen über einen Abtropftisch und/oder durch Flotation des Schlamms behandelt wird.

9. Verfahren nach einem der vorangehenden Ansprüche, **dadurch gekennzeichnet, dass** wenigstens ein Schritt der mechanischen Trennung d) durchgeführt wird, indem der ausgeflockte Schlamm mittels Zentrifugieren behandelt und/oder mittels Durchlauf durch eine Filterpresse behandelt wird.

10. Verfahren nach einem der vorangehenden Ansprüche, **dadurch gekennzeichnet, dass** der in Schritt e) erhaltene behandelte Schlamm einen Trockenheitsgrad von wenigstens 4%, vorteilhafterweise von wenigstens 15%, bevorzugt von wenigstens 20% aufweist.

## Claims

1. Method for thickening or dehydrating sludge, comprising at least:
a) a step of adding cationic starch (AC) to the sludge to be treated;
b) a step of adding clay (AR) to the sludge to be treated;
c) followed by a step of flocculation via stirring of the sludge thus supplemented in order to form a mixture of floes and an aqueous solution;
d) followed by a step of mechanical separation of the floes and the aqueous solution formed in the previous step;
e) followed by a step of recovering the aqueous solution and the floes forming a treated sludge;
wherein the ratio (R) of the weights m_{AR}/(m_{AR}+m_{AC}), expressed in dry weight, ranges from 0.05 to 0.17;
and wherein steps a) and b) are carried out simultaneously or, in any order, one after the other.

2. Method according to claim 1, **characterised in that** the cationic starch (A) is obtained via a cationisation reaction carried out with a cationic reactant comprising nitrogen and has a set weight percentage of nitrogen ranging from 0.1 to 7%, advantageously from 0.5 to 6%, preferably from 1 to 5%.

3. Method according to one of the previous claims, **characterised in that** the cationic starch is obtained from corn starch, wheat starch or waxy corn starch or from potato starch, preferably from potato starch or waxy corn starch, more preferably from potato starch.

4. Method according to one of the previous claims, **characterised in that** the step a) of adding cationic starch is carried out before the step b) of adding clay.

5. Method according to one of the previous claims, **characterised in that** the total quantity of cationic starch in terms of dry weight ranges from 8 to 50g/kg of sludge to be treated (dry/dry), advantageously from 15 to 40g/kg (dry/dry), preferably from 20 to 40g/kg (dry/dry).

6. Method according to one of the previous claims, **characterised in that** the total quantity of clay in terms of dry weight ranges 1 to 20g/kg of sludge to be treated (dry/dry), advantageously from 2 to 15g/kg (dry/dry), preferably between 3 and 10g/kg (dry/dry) (endpoints excluded), more preferably from 6 to 9g/kg.

7. Method according to one of the previous claims, **characterised in that** the sludge to be treated in step a) comes from industrial sludge, in particular from sludge from the agri-food industry such as the sludge from a starch mill, from paper mills, from chemical industries, or from municipal waste.

8. Method according to one of the previous claims, **characterised in that** at least one step of mechanical separation d) is carried out by treating the flocculated sludge via passage over a draining table and/or via flocculation of the sludge.

9. Method according to one of the previous claims, **characterised in that** at least one step of mechanical separation d) is carried out by treating the flocculated sludge via centrifugation and/or via passage over a filter press.

10. Method according to one of the previous claims, **characterised in that** the treated sludge obtained in step e) has a dryness of at least 4%, advantageously of at least 15%, preferably of at least 20%.
